# EUROPEAN PATENT SPECIFICATION

(11) **EP 3 034 651 B1**
(45) Date of publication and mention of the grant of the patent: **24.07.2019**
(21) Application number: 15199318.5
(22) Date of filing: 10.12.2015
(51) Int. Cl.: C23C 24/10, B23K 9/04, C23C 28/02, F01D 5/28

(54) **DIRECT DEPOSITION OF METALLIC COATING**
DIREKTES AUFBRINGEN VON METALLISCHER BESCHICHTUNG
DÉPÔT DIRECT DE REVÊTEMENT MÉTALLIQUE

(30) Priority: 15.12.2014 US 201462091901 P
(43) Date of publication of application: 22.06.2016
(73) Proprietor: United Technologies Corporation, Farmington, CT 06032 (US)
(72) Inventor: THAYER, Henry H., Wethersfield, CT 06109 (US); WHITMAN, Giovanni, Berlin, CT 06037 (US); LARSON, Gary J., Madison, CT 06443 (US); LIN, Wangen, South Glastonbury, CT 06073 (US)
(74) Representative: Dehns

(56) References cited:
- EP-A1- 2 371 986
- WO-A1-2013/126472
- WO-A1-2014/150335

## Description

### BACKGROUND

This disclosure relates to methods of coating a part and more specifically to uniformly coating a part that includes a non-line-of-sight (NLOS) portion.

Coatings are used to protect surfaces of parts such as those used in a gas turbine engine. In a gas turbine, engine parts such as turbine vanes are routinely exposed to high temperatures as a result of hot combustion gases that pass over the vanes. Exposure to these gases, over time, can decrease the lifespan of the vane, which can lead to increased costs due to maintenance or failure of the vane.

Coating turbine blades that are provided in a cluster can be challenging This is because portions of the vanes in a cluster shadow each other which creates an NLOS section on at least one of the vanes. It is difficult to apply a uniform coating to a vane cluster using spray coating, for example, because the NLOS section is not accessible to the spray coating. Therefore, using conventional techniques, each vane in the vane cluster will not have a uniform coating. There is thus a need for improved coating techniques for vane assemblies containing shadowed vane sections.

WO 2014/150 335 relates to a multiple coating configuration. WO 2013/126 472 relates to a method for coating a substrate.

### SUMMARY

A method for coating a part according to claim 1 includes the step of binding a metallic powder to a section of the part. The metallic powder is then energized which at least partially melts and resolidifies the metallic powder to form a first metallic coating. After the first layer of metallic coating is formed, a second layer of metallic coating is deposited on substantially all of the part.

In a further aspect of the disclosure a method for uniformly coating a vane includes the step of binding a metallic powder to an inboard surface of the vane that is shadowed by another vane of a vane cluster. The metallic powder is then energized by an electro spark deposition process which at least partially melts and resolidifies the metallic powder to form a first metallic coating having a desired thickness on the shadowed inboard surface of the vane. After the first layer of metallic coating is formed, a second metallic coating is deposited on substantially the entire vane. The first and second coatings are deposited to provide a substantially uniform coating on the vane.

### BRIEF DESCRIPTION OF THE DRAWINGS

FIG. 1 is a flow diagram showing an embodiment of a method of coating a part.
FIG. 2 is a partial cross-sectional view of a gas turbine engine.
FIG. 3 is a perspective view of a vane cluster.
FIG. 4 is a cross-sectional view of an uncoated vane cluster showing a non-line of sight area.
FIG.5 is a cross-sectional view of a vane cluster showing an electro-spark-deposition applicator.
FIG. 6 is a cross-sectional view of a coated vane cluster.

### DETAILED DESCRIPTION

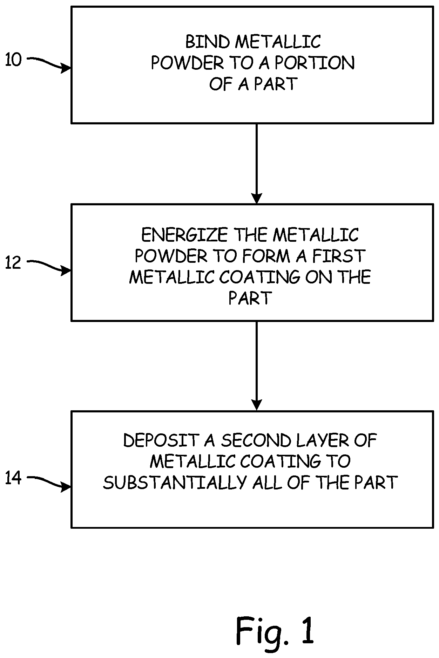

Disclosed herein is a method for providing a uniform metallic coating to a part that includes a non-line-of-sight (NLOS) section. One embodiment of the method includes depositing a first metallic coating to a section of the part. As shown in FIG. 1, depositing the first metallic coating includes binding step 10 which includes binding a metallic powder to the section of the part. Energizing step 12 follows binding step 10 and includes using a contact-metal deposition process, namely an electro spark deposition process, to energize and at least partially melt the powder. Upon resolidification of the powder, a first metallic coating is formed. After the first metallic coating is formed, a second metallic coating is deposited on substantially all of the part at deposition step 14. As further discussed below, coating a part according to this method has many benefits, including the following non-limiting examples: increasing the overall speed of the coating process; exposing the part being coated to minimal heat and force; and providing a substantially uniform metallic coating on the part.

To better illustrate the principles of this disclosure, another embodiment will be described. In this embodiment, the part to be coated is a turbine vane cluster of a gas turbine engine. One having ordinary skill in the art will understand, however, that the principles described herein are applicable to coating many parts and are not limited to turbine vane clusters.

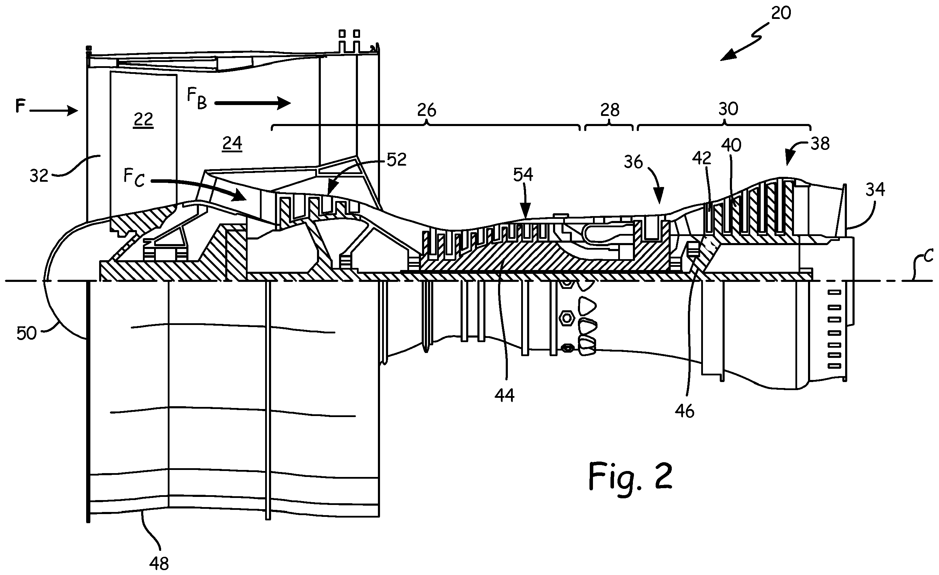

To understand the need to coat turbine vane clusters and the considerations involved, the general operating principles of an exemplary gas turbine engine in accordance with the embodiments of the present disclosure will be described with respect to FIG. 2. FIG. 2 is a cross-sectional view of gas turbine engine 20. Gas turbine engine 20 includes fan 22 with bypass duct 24 oriented about a turbine core having compressor section 26, combustor(s) 28, and turbine 30, which are arranged in flow series along an axial direction with an upstream inlet 32 and downstream exhaust 34.

Turbine 30 includes high-pressure (HPT) section 36 and low-pressure (LPT) section 38. Turbine sections 36 and 38 each have a number of alternating turbine blades 40 and turbine vanes 42. Turbine vanes 42 are circumferentially oriented with respect to one another, and collectively form a full, annular ring about turbine centerline axis C*_{L}* of gas turbine engine 20. HPT section 36 of turbine 30 is coupled to compressor section 26 via HPT shaft 44, forming the high pressure spool. Low-pressure section 38 is coupled to fan 22 via LPT shaft 46, forming the low pressure spool. LPT shaft 46 is coaxially mounted within HPT shaft 44, about turbine centerline axis C*_{L}*.

Fan 22 is typically mounted to a fan disk or other rotating member, which is driven by LPT shaft 46. As shown in FIG. 2, for example, fan 22 is forward-mounted in engine cowling 48, upstream of bypass duct 24 and compressor section 26, with spinner 50 covering the fan disk to improve aerodynamic performance. Alternatively, fan 22 is aft-mounted in a downstream location, and the coupling configuration varies. Furthermore, while FIG. 2 illustrates a particular two-spool high-bypass turbofan embodiment of gas turbine engine 20, this example is merely illustrative. In other embodiments, gas turbine engine 20 is configured either as a low-bypass turbofan or a high-bypass turbofan, as described above, and the number of spools and fan position vary.

In operation of gas turbine engine 20, airflow F enters via upstream inlet 32 and divides into bypass flow F*_{B}* and core flow F*_{C}* downstream of fan 22. Bypass flow F*_{B}* passes through bypass duct 24 generating thrust; core flow F*_{C}* passes along the gas path through compressor section 26, combustor(s) 28 and turbine 30.

Compressor section 26 includes low pressure compressor 52 and high pressure compressor 54 which together compress incoming air for combustor(s) 28 where it is mixed with fuel and ignited to produce hot combustion gas. The combustion gas exits combustor(s) 28 to enter HPT section 36 of turbine 30, driving HPT shaft 44 and thereby compressor section 26. Partially expanded combustion gas transitions from HPT section 36 to LPT section 38, driving fan 22 via LPT shaft 46. Exhaust gas exits gas turbine engine 20 via downstream exhaust 34.

The thermodynamic efficiency of gas turbine engine 20 is strongly tied to the overall pressure ratio, as defined between the compressed air pressure entering combustor(s) 28 and the delivery pressure at upstream inlet 32. In general, higher pressure ratios offer increased greater specific thrust, and may result in higher peak gas path temperatures, particularly downstream of combustor(s) 28, including HPT section 36.

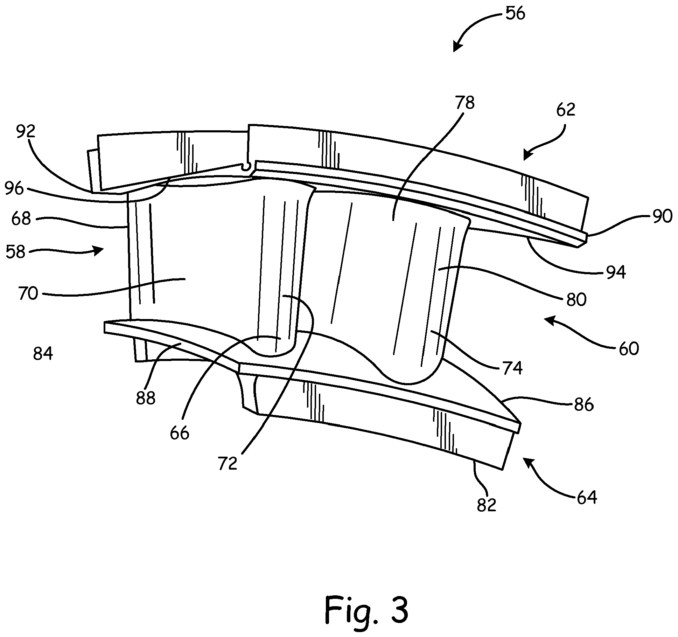

FIG. 3 is a perspective view of vane cluster 56 in HPT 36. In this embodiment vane cluster 56 is a doublet and includes vanes 58 and 60 which are representative of vane 42 as depicted in FIG. 1. In other embodiments, vane cluster 56 may include any plural number of vanes. Vane cluster 56 also includes outer shroud 62, and inner platform 64. Vanes 58 and 60 are secured between outer shroud 62 and inner platform 64. Vane cluster 56 can be formed of any material commonly used in the art. For example, suitable non-limiting materials include titanium, titanium alloy, ceramic matrix composite, and monolithic ceramic compositions.

Vane 58 includes leading edge 66, trailing edge 68, pressure sidewall 70, and suction sidewall 72. Pressure sidewall 70 extends between leading edge 66 and trailing edge 68 and forms the concave pressure side of vane 58. Suction sidewall 72 extends between leading edge 66 and trailing edge 68 and forms the convex suction side of vane 58.

Vane 60 is similarly configured. Vane 60 includes leading edge 74, trailing edge 76 (not shown in FIG. 3), pressure sidewall 78, and suction sidewall 80. Pressure sidewall 78 extends between leading edge 74 and trailing edge 76 and forms the concave pressure side of vane 60. Suction sidewall 80 extends between leading edge 74 and trailing edge 76 and forms the convex suction side of vane 60.

Vanes 58 and 60 are circumscribed by inner platform 64 and outer shroud 62. Inner platform 64 is an arcuate band disposed radially outward from C*_{L}* and is secured to vanes 58 and 60. Inner platform 64 includes leading edge 82, trailing edge 84, suction side edge 86, and pressure side edge 88.

Outer shroud 62 is an arcuate band disposed radially outward from inner platform 64 and is secured to vanes 58 and 60. Outer shroud 62 includes leading edge 90, trailing edge 92, suction side edge 94, and pressure side edge 96. Suction side edge 94 and pressure side edge 96 together with suction side edge 86 and pressure side edge 88 of outer shroud and inner platform, respectively, are secured to outer shrouds and inner platforms (not shown) of adjacent vane clusters to form a complete stationary turbine vane stage circumferentially extending about C*_{L}*.

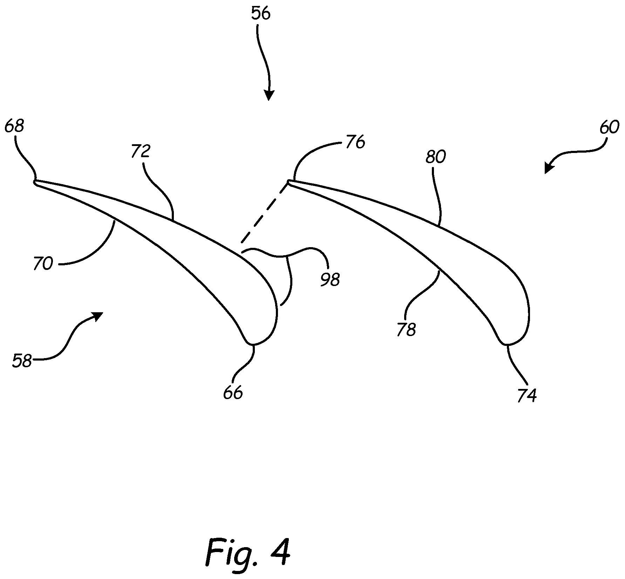

Turbine vanes 58 and 60 direct the flow of hot combustion gases from combustor(s) 28 across turbine blade 40 and through HPT 36. Because turbine vanes 58 and 60 are exposed to extremely high temperatures, it is necessary to coat vanes 58 and 60 with protective metallic coating such as a nickel- or cobalt-based alloy. Coating the vanes can help to increase the performance life of vanes 58 and 60. It is desirable to coat vanes 58 and 60 to have a uniform thickness. In general, uniform coating can help to ensure that one section of either vane 58 or 60 is not damaged before another section. Each vane 58 or 60 can be coated individually before vane cluster 56 is assembled. It can be more efficient, however, to coat vanes 58 and 60 after vane cluster 56 is assembled. Uniformly coating the individual vanes of assembled vane cluster 56 can be difficult, however, because vane cluster 56 includes a first line-of-sight (LOS) section and a second non-line-of-sight (NLOS) section. To explain the difficulties in coating a vane cluster 56 including LOS and NLOS sections reference is made below to FIG. 4 with continuing reference to FIG. 3.

FIG. 4 is a top-plan view of vane cluster 56 showing vanes 58 and 60 but omitting outer shroud 62 and inner platform 64. As described above, with respect to FIG. 3, each of vanes 58 and 60 include a leading edge and a trailing edge with a suction sidewall and pressure sidewall extending therebetween and opposing each other. Metallic coating can generally be deposited to vanes 58 and 60 of vane cluster 56 by one of a few non-limiting techniques, known as LOS techniques, including: low pressure plasma spray; electron beam physical vapor deposition; air spray; or electron beam directed vapor techniques. In some embodiments these LOS coatings are applied by a tool that is able to rotate around vane cluster 56. Alternatively, the tool can be stationary and vane cluster 56 can be rotated as metallic coating is applied.

As illustrated in FIG. 4, suction sidewall 80 of vane 60 and pressure sidewall 70 of vane 58 are outboard surfaces that are directly accessible with many of the above described coating techniques. Pressure sidewall 78 of vane 60 and suction sidewall 72 of vane 58, conversely, are inboard surfaces and include a section where pressure sidewall 78 and suction sidewall 72 partially shadow each other. NLOS section 98 results from the shadowing caused by vane 60 and is located on suction sidewall 72 of vane 58. In other embodiments, depending on the orientation of vanes 58 and 60 with respect to each other, NLOS section 98 can include up to substantially the entire surface of pressure sidewall 78 and suction sidewall 72. Because of the partial shadowing of NLOS section 98 in assembled vane clusters 56, the above described LOS coating techniques are largely prevented from evenly depositing coating on NLOS section 98. For example, a region of NLOS section 98 that is closest to an LOS section may receive some coating but regions farther away from LOS section(s) may receive little or no coating.

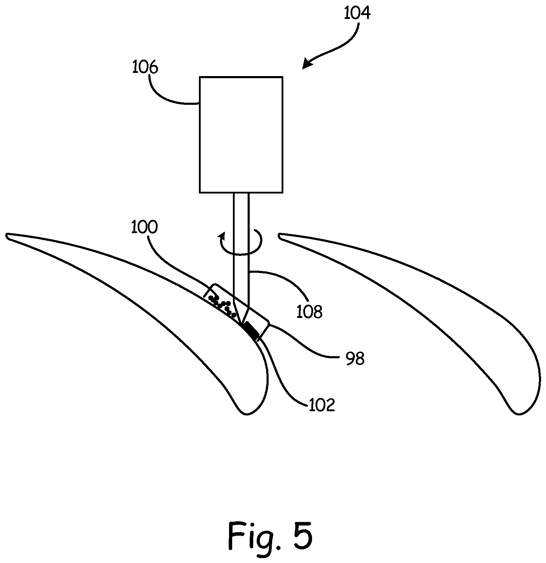

FIG. 5 schematically illustrates an embodiment of a system and method for applying a first metallic coating to NLOS section 98 of vane 58. Many of the same features as described with respect to FIGS. 3 and 4 are shown in FIG. 5 along with the addition of metallic powder 100, first metallic coating 102, and electro-spark-deposition device 104, which includes capacitor-based power supply 106 and electrode 108.

Metallic powder 100 is bound, as will be discussed further below, to NLOS section 98 and can be a nickel- or cobalt-based alloy. In a non-limiting example, the composition of metallic powder 100 can have a composition the includes 20 percent by weight of cobalt, 15 percent by weight of chromium, 11.8 percent by weight of aluminum, 0.4 percent by weight of yttrium, 0.2 percent by weight of silicon, 0.1 percent by weight of hafnium and a remainder of nickel and any trace elements. The size of the particles composing metallic powder 100 can vary. Larger particles may be more difficult to bind to NLOS section 98 while smaller particles may be more difficult to control during the binding process. Particle size selection can depend on the desired properties of first coating 102 or the properties of the binder. As a non-limiting example the average particle diameter of metallic powder 100 can range from about 0.5 micrometers to about 88 micrometers.

Referring back to FIG. 1, at binding step 10 metallic powder 100 is bound to NLOS section 98 of vane 58. To facilitate binding metallic powder 100 to NLOS section 98, a hydrocarbon-based binder is used. The hydrocarbon-based binder can be a starch-based binder, glucose-based binder, or a protein-based binder. In one embodiment, the protein can be gluten. The hydrocarbon-based binder can be deposited alone or dissolved in a solvent. Acceptable solvents for dissolving hydrocarbons such as glucose-based hydrocarbons or proteins are known in the art and can include the following non-limiting examples: methanol; ethanol; ethyl acetate; and water. The hydrocarbon-based binder and solvent solution's concentration can vary depending on the solubility of the binder or desired properties of the solution. For example, the solution could be 20-80 percent by volume hydrocarbon-based binder with the balance being solvent or 40-60 percent by volume hydrocarbon-based binder with the balance being solvent.

The hydrocarbon-based binder and metallic powder 100 can be deposited on NLOS section 98 several ways. For example, the hydrocarbon-based binder and metallic powder 100 can be sprayed or painted on NLOS section 98. The hydrocarbon-based binder and metallic powder 100 can, additionally, be deposited on NLOS section 98 individually or together (e.g., in a slurry).

As an example of binding step 10, hydrocarbon-based binder can be first applied to the NLOS section 98 (e.g., by painting). After the binder is applied, metallic powder 100 can be sprayed, within a stream of inert gas such as argon, onto the hydrocarbon-based binder. To accomplish this, metallic powder 100 and the argon gas can dispensed through a tube to deposit on NLOS section 98. The tube can be small and flexible and can, therefore, be positioned within an area that is difficult to access such as the NLOS section 98 of vane 58.

After metallic powder 100 is bound on NLOS section 98, first metallic coating 102 is formed by the application of an electro-spark deposition process to metallic powder 100 in accordance with energizing step 12, referenced in FIG.1. Electro-spark deposition is a type of contact-metal deposition process. Electro-spark deposition may, alternatively, be known as spark hardening, electro-spark toughening, electro-spark alloying, pulsed fusion surfacing, or pulsed electrode surfacing. Electro-spark deposition device 104 is used to perform the process and can include capacitor-based power supply 106 and electrode 108. In certain embodiments electrode 108 is formed from the same alloy as metallic powder 100 (e.g., Ni- or Co-based alloy). In further embodiments electrode 108 can be configured to rotate during deposition. Rotation of electrode 108 can help to evenly distribute molten electrode material to NLOS section 98.

In operation of electro-spark-deposition device 104, electrode 108 is in contact with NLOS section 98, a first voltage is then applied to electrode 108, and a second voltage is then applied to vane cluster 56. The first voltage is greater than the second voltage and the second voltage is a ground. The first voltage generates a plasma arc at a high temperature between the tip of electrode 108 and NLOS section 98. In some embodiments the temperature can range from about 8,000 °C to about 25,000 °C. The plasma arc ionizes electrode 108 and a small amount of molten electrode material is transferred from electrode 108 to NLOS section 98. The plasma arc also melts metallic powder 100 already present on NLOS section 98. Both of the molten electrode material and molten metallic powder 100 resolidfy to form first metallic coating 102 on NLOS section 98. First metallic coating 102 thus is composed of metallic powder 100 that is bound to NLOS section 98 along with molten metal from electrode 108.

There are many benefits in using electro-spark deposition to form first metallic coating 102 including the following non-limiting examples. First, the electro-spark deposition process is able to melt a portion of electrode 108 and metallic powder 100 while imparting minimal heat input to vane 58. This is because the current pulses generating heat are short duration pulses. Second, the force applied to vane 58 by electrode 108 is minimal (e.g., about 3N to about 5N). Therefore, because of the low heat input and low amount of force applied to vane 58, vane 58's microstructure is substantially unaltered through the deposition process. This is in contrast to other deposition techniques such as laser and resistance welding, which may alter the microstructure of the substrate being coated due mostly to high heat imparted to the substrate.

There are many benefits to binding metallic powder 100 to NLOS section 98 prior to using the above described electro-spark deposition process to form first metallic coating 102 including the following non-limiting examples. First, electro-spark deposition, when used alone, can be a slow process. By initially depositing metallic powder 100, however, the overall speed of the process can be increased. This is because molten metal is transferred from electrode 108 as metallic powder 100 is simultaneously melted onto NLOS section 98. Second, first metallic coating 102 can also be thicker than it would be if only electro-spark deposition were used. This is because the maximum thickness of metallic coating that can be formed from molten electrode 108 can be augmented by the melting and resolidification of metallic powder 100.

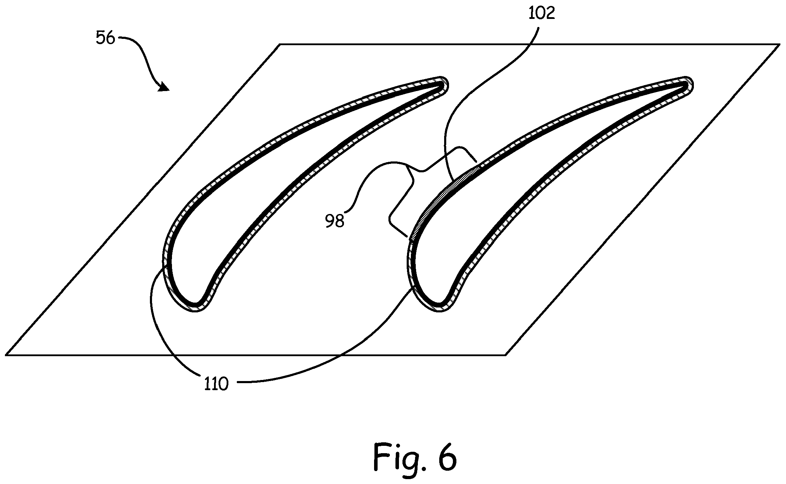

In addition to NLOS section 98 being coated, the remainder of vane cluster 56 is also coated. FIG. 6 shows vane cluster 56 where first metallic coating 102 has been formed in NLOS section 98 in accordance with steps 10 and 12 as described in FIG. 1. As further shown in FIG. 6, second metallic coating 110 has been deposited on substantially all of vane cluster 56 in accordance with step 14, as described in FIG. 1. This includes those sections of vane cluster 56 that are LOS sections. After both metallic coatings 102 and 110 have been applied, vane cluster 56 will have a coating of a uniform thickness.

The deposition techniques for second metallic coating 110 can include: low pressure plasma spray; electron beam physical vapor deposition; air spray; or electron beam directed vapor techniques. As previously described, these techniques are primarily LOS techniques and either provide either no coating to NLOS section 98 or provide a thinner coating than the coating on the LOS sections. The combination of these LOS coating techniques with the coating techniques for NLOS section 98 described above, however, do provide a substantially uniform coating on vane cluster 56.

There are several ways to combine these NLOS and LOS coating techniques. As an example, if second metallic coating 110 is only deposited on the LOS sections of vane cluster 56. The thickness of first metallic coating 102 on NLOS section 98 can, accordingly, be formed to equal the thickness of second metallic coating 110. Thus, a uniform coating of vane cluster 56 can be achieved. FIG. 6 shows an embodiment of coated vane cluster 56 in accordance with this example.

As another example, second metallic coating 110 can be deposited on both the LOS sections and NLOS section 98 of vane cluster 56. Because of the difficulties in coating NLOS section 98 with the above described LOS techniques, second metallic coating 110 will have a first thickness on LOS sections of vane cluster 56 and a second thickness different from the first thickness on NLOS section 98. Usually the second thickness will be less than the first thickness. In this case, a uniform coating of vane cluster 56 can be achieved because the thickness of first metallic coating 102 will augment the second thickness of second metallic coating 110 such that the sum of the thicknesses of first metallic coating 102 and the second thickness of second metallic coating 110 are substantially equivalent to the first thickness of second metallic coating 110.

## Claims

1. A method for coating a part, comprising:
binding a metallic powder to a section (98) of the part;
energizing the metallic powder (100) to at least partially melt and resolidify the metallic powder (100) to form a first metallic coating (102); and
depositing a second metallic coating (110) to substantially all of the part;
wherein energizing the metallic powder comprises the simultaneous steps of:
transferring a molten material to the section (98);
melting the metallic powder (100) onto the section (98);
wherein the binding includes binding a hydrocarbon-based binder to the part; wherein, optionally the hydrocarbon-based binder comprises a protein; and further optionally the protein is gluten;
wherein a contact metal deposition process energizes the metallic powder (100); and
wherein the contact metal deposition process is an electro spark deposition process which utilizes an electrode (108) and comprises:
applying a first voltage to the electrode (108);
applying a second voltage to the part, wherein the first voltage is greater than the second voltage; and
touching the electrode (108) to the section (98) of the part, wherein a microstructure of the part is substantially unaltered by the electro-spark deposition process.

2. The method of claim 1, wherein the binding includes depositing the metallic powder (100) on the binder; wherein, optionally the metallic powder (100) comprises a nickel- or cobalt-based alloy.

3. The method of claim 1 or 2, wherein the metallic powder (100) is bound to the section (98) of the part by spraying the powder (100) onto the section (98) of the part.

4. The method of any preceding claim, wherein the second metallic coating (110) has a first thickness on the section (98) of the part and a second thickness different from the first thickness on another section (98) of the part.

5. The method of claim 1, wherein the electrode (108) comprises a nickel- or cobalt-based alloy and supplies a portion of the metallic coatings (102, 110).

6. The method of any preceding claim, wherein the part is a first vane (58) of a vane cluster (56) having a plurality of vanes (42; 58, 60).

7. The method of claim 6, wherein the section (98) of the first vane (58) is an inboard surface of the first vane (58) that is shadowed by a second vane (60) of the vane cluster (56).

8. The method of claim 7, wherein the first metallic coating (102) is formed with a desired thickness on the shadowed inboard surface of the vane (58) and the first and second metallic coatings (102, 110) together provide a substantially uniform coating to the vane (58).

9. The method of claim 7 or 8, wherein the second metallic coating (110) has a first thickness on a surface of the vane (58) that is not shadowed and a second thickness different from the first thickness on the shadowed surface of the vane (58).

10. The method of claim 9, wherein the first thickness of the second metallic coating (110) is equal to the sum of the second thickness of the second metallic coating (110) and a third thickness of the first metallic coating (102).

11. The method of any preceding claim, wherein the step of depositing the second metallic coating (110) to substantially all of the part is performed using a process selected from a group consisting of: low pressure plasma spray, electron beam physical vapor deposition, air spray, electron beam directed vapor deposition, and combinations thereof.

12. The method of any preceding claim, wherein the metallic powder (100) is energized to form the first metallic coating (102) on the section (98) of the part before the second metallic coating (110) is deposited to substantially all of the part.

## Patentansprüche

1. Verfahren zum Beschichten eines Teils, das Folgendes umfasst:
Binden eines metallischen Pulvers an einen Bereich (98) des Teils;
Unter-Strom-Setzen des metallischen Pulvers (100), um das metallische Pulver (100) mindestens teilweise zu schmelzen und erneut zu verfestigen, um eine erste metallische Beschichtung (102) zu bilden; und
Aufbringen einer zweiten metallischen Beschichtung (110) auf im Wesentlichen das gesamte Teil;
wobei das Unter-Strom-Setzen des metallischen Pulvers die folgenden simultanen Schritte umfasst:
Übertragen eines geschmolzenen Materials auf den Bereich (98);
Aufschmelzen des metallischen Pulvers (100) auf den Bereich (98);
wobei das Binden ein Binden eines Bindemittels auf Kohlenwasserstoffbasis an das Teil einschließt; wahlweise wobei das Bindemittel auf Kohlenwasserstoffbasis ein Protein umfasst; und ferner wahlweise wobei das Protein Gluten ist;
wobei ein Kontaktmetallaufbringungsprozess das metallische Pulver (100) unter Strom setzt; und
wobei der Kontaktmetallaufbringungsprozess ein Elektrofunkenaufbringungsprozess ist, welcher eine Elektrode (108) verwendet und Folgendes umfasst:
Anlegen einer ersten Spannung an die Elektrode (108);
Anlegen einer zweiten Spannung an das Teil, wobei die erste Spannung größer ist als die zweite Spannung; und
Berühren des Bereichs (98) des Teils mit der Elektrode (108), wobei eine Mikrostruktur des Teils durch den Elektrofunkenaufbringungsprozess im Wesentlichen unverändert bleibt.

2. Verfahren nach Anspruch 1, wobei das Binden ein Aufbringen des metallischen Pulvers (100) auf das Bindemittel einschließt, wahlweise wobei das metallische Pulver (100) eine Legierung auf Nickel- oder Kobaltbasis umfasst.

3. Verfahren nach Anspruch 1 oder 2, wobei das metallische Pulver (100) durch ein Aufsprühen des Pulvers (100) auf den Bereich (98) des Teils an den Bereich (98) des Teils gebunden wird.

4. Verfahren nach einem der vorhergehenden Ansprüche, wobei die zweite metallische Beschichtung (110) eine erste Dicke auf dem Bereich (98) des Teils und eine zweite Dicke, die sich von der ersten Dicke unterscheidet, auf einem anderen Bereich (98) des Teils aufweist.

5. Verfahren nach Anspruch 1, wobei die Elektrode (108) eine Legierung auf Nickel- oder Kobaltbasis umfasst und einen Teil der metallischen Beschichtungen (102, 110) stellt.

6. Verfahren nach einem der vorhergehenden Ansprüche, wobei das Teil eine erste Leitschaufel (58) einer Leitschaufelansammlung (56), die eine Vielzahl von Leitschaufeln (42; 58, 60) aufweist, ist.

7. Verfahren nach Anspruch 6, wobei der Bereich (98) der ersten Leitschaufel (58) eine innenliegende Fläche der ersten Leitschaufel (58) ist, die von einer zweiten Leitschaufel (60) der Leitschaufelansammlung (56) beschattet ist.

8. Verfahren nach Anspruch 7, wobei die erste metallische Beschichtung (102) mit einer gewünschten Dicke auf der beschatteten innenliegenden Fläche der Leitschaufel (58) gebildet wird und die erste und die zweite metallische Beschichtung (102, 110) gemeinsam eine im Wesentlichen gleichmäßige Beschichtung an die Leitschaufel (58) bereitstellen.

9. Verfahren nach Anspruch 7 oder 8, wobei die zweite metallische Beschichtung (110) eine erste Dicke auf einer Fläche der Leitschaufel (58), die nicht beschattet ist, und eine zweite Dicke, die sich von der ersten Dicke unterscheidet, auf der beschatteten Fläche der Leitschaufel (58) aufweist.

10. Verfahren nach Anspruch 9, wobei die erste Dicke der zweiten metallischen Beschichtung (110) gleich einer Summe der zweiten Dicke der zweiten metallischen Beschichtung (110) und einer dritten Dicke der ersten metallischen Beschichtung (102) ist.

11. Verfahren nach einem der vorhergehenden Ansprüche, wobei der Schritt des Aufbringens der zweiten metallischen Beschichtung (110) auf im Wesentlichen das gesamte Teil unter Verwendung eines Prozesses durchgeführt wird ausgewählt aus der Gruppe bestehend aus: Niedrigdruckplasmasprühverfahren, Elektronenstrahlaufdampfung, Luftsprühverfahren, gerichteter Elektronenstrahlaufdampfung und Kombinationen davon.

12. Verfahren nach einem der vorhergehenden Ansprüche, wobei das metallische Pulver (100) unter Strom gesetzt wird, um die erste metallische Beschichtung (102) auf dem Bereich (98) des Teils zu bilden, bevor die zweite metallische Beschichtung (110) auf im Wesentlichen das gesamte Teil aufgebracht wird.

## Revendications

1. Procédé pour revêtir une pièce, comprenant :
la liaison d'une poudre métallique sur une section (98) de la pièce ;
la stimulation de la poudre métallique (100) pour faire fondre au moins partiellement et resolidifier la poudre métallique (100) afin de former un premier revêtement métallique (102) ; et
déposer un deuxième revêtement métallique (110) sur sensiblement la totalité de la pièce ;
dans lequel le fait de stimuler la poudre métallique comprend les étapes simultanées consistant à :
transférer un matériau fondu sur la section (98) ;
faire fondre la poudre métallique (100) sur la section (98) ;
dans lequel la liaison inclut la liaison d'un liant hydrocarboné sur la pièce ;
dans lequel le liant hydrocarboné comprend éventuellement une protéine ; et la protéine est en outre éventuellement du gluten ;
dans lequel un procédé de dépôt métallique par contact stimule la poudre métallique (100) ;
dans lequel le procédé de dépôt métallique par contact est un procédé de dépôt par électro-étincelle qui utilise une électrode (108) et comprend :
l'application d'une première tension à l'électrode (108) ;
l'application d'une deuxième tension à la pièce, dans lequel la première tension est plus importante que la deuxième tension ; et
la mise en contact de l'électrode (108) avec la section (98) de la pièce, dans lequel une microstructure de la pièce est sensiblement non modifiée par le procédé de dépôt par électro-étincelle.

2. Procédé selon la revendication 1, dans lequel la liaison inclut le fait de déposer la poudre métallique (100) sur le liant ; dans lequel la poudre métallique (100) comprend éventuellement un alliage à base de nickel ou de cobalt.

3. Procédé selon la revendication 1 ou 2, dans lequel la poudre métallique (100) est liée à la section (98) de la pièce par pulvérisation de la poudre (100) sur la section (98) de la pièce.

4. Procédé selon une quelconque revendication précédente, dans lequel le deuxième revêtement métallique (110) présente une première épaisseur sur la section (98) de la pièce et une deuxième épaisseur différente de la première épaisseur sur une autre section (98) de la pièce.

5. Procédé selon la revendication 1, dans lequel l'électrode (108) comprend un alliage à base de nickel ou de cobalt et fournit une partie des revêtements métalliques (102, 110).

6. Procédé selon une quelconque revendication précédente, dans lequel la pièce est une première aube (58) d'un ensemble d'aubes (56) ayant une pluralité d'aubes (42 ; 58, 60).

7. Procédé selon la revendication 6, dans lequel la section (98) de la première aube (58) est une surface intérieure de la première aube (58) qui est masquée par une deuxième aube (60) de l'ensemble d'aubes (56).

8. Procédé selon la revendication 7, dans lequel le premier revêtement métallique (102) est formé avec une épaisseur souhaitée sur la surface intérieure masquée de l'aube (58) et les premier et deuxième revêtements métalliques (102, 110) fournissent ensemble un revêtement sensiblement uniforme à l'aube (58).

9. Procédé selon la revendication 7 ou 8, dans lequel le deuxième revêtement métallique (110) présente une première épaisseur sur une surface de l'aube (58) qui n'est pas masquée et une deuxième épaisseur différente de la première épaisseur sur la surface masquée de l'aube (58).

10. Procédé selon la revendication 9, dans lequel la première épaisseur du deuxième revêtement métallique (110) est égale à la somme de la deuxième épaisseur du deuxième revêtement métallique (110) et d'une troisième épaisseur du premier revêtement métallique (102).

11. Procédé selon une quelconque revendication précédente, dans lequel l'étape consistant à déposer le deuxième revêtement métallique (110) sur sensiblement la totalité de la pièce est effectuée en utilisant un procédé choisi parmi le groupe constitué de la pulvérisation de plasma à basse pression, le dépôt physique en phase vapeur par faisceau d'électrons, la pulvérisation d'air, le dépôt en phase vapeur dirigé par faisceau d'électron, et des combinaisons de ces derniers.

12. Procédé selon une quelconque revendication précédente, dans lequel la poudre métallique (100) est stimulée pour former le premier revêtement métallique (102) sur la section (98) de la pièce avant que le deuxième revêtement métallique (110) ne soit déposé sur sensiblement la totalité de la pièce.
